# EUROPÄISCHE PATENTSCHRIFT

(11) **EP 2 661 655 B1**
(45) Veröffentlichungstag und Bekanntmachung des Hinweises auf die Patenterteilung: **23.08.2017**
(21) Anmeldenummer: 11817531.4
(22) Anmeldetag: 23.12.2011
(51) Int. Cl.: G05B 19/409, G05B 19/418

(54) **PRODUKTIONSANLAGE MIT ZEITINDEXIERTER HISTORISCHER ANZEIGE**
PRODUCTION INSTALLATION WITH TIME-INDEXED HISTORICAL DISPLAY
INSTALLATION DE PRODUCTION AVEC AFFICHAGE HISTORIQUE INDEXÉ SUR LE TEMPS

(30) Priorität: 05.01.2011 AT 162011
(43) Veröffentlichungstag der Anmeldung: 13.11.2013
(73) Patentinhaber: Progress Maschinen & Automation AG, 39042 Brixen (IT)
(72) Erfinder: NUSSBAUMER, Erich, I-39010 Nals (IT) (IT); HELLRIGL, Richard, Michael, I-39042 Brixen (IT) (IT)
(74) Vertreter: Torggler & Hofinger Patentanwälte
(86) Internationale Anmeldenummer: PCT/IB2011/003227
(87) Internationale Veröffentlichungsnummer: WO 2012/093282

(56) Entgegenhaltungen:
- EP-A2- 2 119 542
- WO-A1-2009/105704
- DE-A1-102004 055 413
- US-A1- 2008 066 019
- US-A1- 2009 088 875
- US-A1- 2009 164 933
- US-A1- 2009 288 029

## Beschreibung

Die Erfindung betrifft eine Produktionsanlage zur automatisierten Herstellung von Teilen, mit einer Palettenumlaufanlage zur Herstellung von bewehrten Betonelementen, wobei die Betonelement auf nahezu jeder Palette der Palettenumlaufanlage zueinander unterschiedliche Formen aufweisen, einer Bewehrungsanlage zur Herstellung von Bewehrungselementen, wobei die Bewehrungselemente unterschiedliche Formen aufweisen, einem elektronischen Leitrechner, der mit Sensoren und Steuerungselementen der Produktionsanlage in Verbindung steht und den Produktionsablauf steuert und mindestens einer Anzeigeeinrichtung zur schematischen grafischen Darstellung der Produktionsanlage und deren aktuellen Zustandsdaten.

Grundsätzlich sind Produktionsanlagen bzw. Palettenumlaufanlagen zur Herstellung von Betonelementen beispielsweise aus der EP 2 119 542 A2, der EP 2 017 049 A2 und der DE 34 16 028 C2 bekannt.

Die meisten modernen Fertigteil-Umläufe haben gegenüber den sonst üblichen Fertigungsstraßen, wie sie etwa aus der Automobil-Industrie bekannt sind, eine Besonderheit, die die gesamte Maschinen-Technik in weiten Teilen dominiert: Es werden keine Serien hergestellt, sondern nur Einzelprodukte, die zudem noch eine extrem starke Variabilität aufweisen. Für die Maschinen und für die Ablauf-Organisation stellt das eine besondere Herausforderung dar: Es können keine Vorgänge oder Abläufe spezifisch vorgegeben werden (sogenanntes "Teach-In"), sondern alles wird aufgrund der vorhandenen Online-Daten Just-in-Time berechnet. Die Maschinen verhalten sich also so wie es ihre Algorithmen aufgrund des zu produzierenden Teils ermitteln und sind nicht speziell auf das zu produzierende Fertigteil eingestellt worden. Auch die Menschen, die in der Anlage arbeiten, müssen Just-in-Time entscheiden, wie sie auf eine bestimmte Situation reagieren und wie sie die Prioritäten ihrer Tätigkeiten setzen.

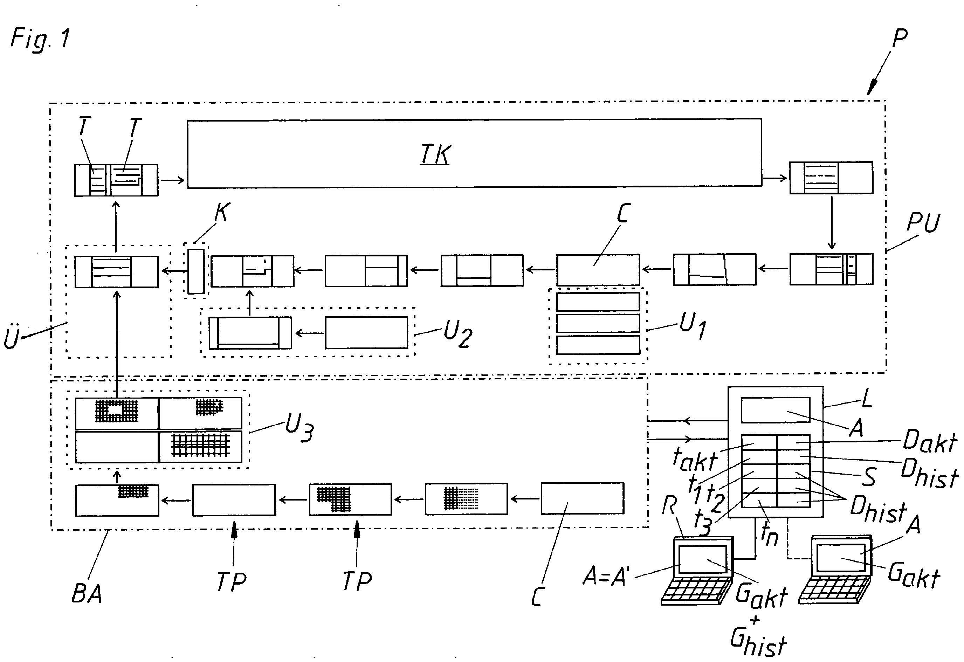

Bei hochautomatisierten Anlagen kommt nun erschwerend hinzu, dass mehrere zunächst unabhängige Teilumläufe existieren können, die ihre eigene Ablaufsequenz haben, dann aber an einem Übergabe-Punkt ihr Teil-Produkt rechtzeitig bereitstellen müssen. So ist beispielsweise die Bewehrungsanlage gemäß Fig. 1 ein zunächst autonomer Teil, der sein eigenes Timing hat; am Punkt "Bewehrungsübergabe" muss aber die Bewehrung an die Umlaufpalette übergeben werden, und zwar so, dass diese nicht warten muss. Zur Entkopplung solcher Teile gibt es üblicherweise einen kleinen Zwischenpuffer, der aber nur beschränktes Fassungsvermögen hat. Wenn dieser ganz voll oder ganz leer ist, muss zwangsläufig eines der Teilsysteme warten. Auch diese Teilsystem-Problematik ist an sich noch nichts besonderes, sondern wird nur dadurch ungewöhnlich schwierig, dass keine sich wiederholende Serienfertigung vorliegt, sondern eine sich ständig tiefgreifend ändernde Produktabfolge.

Die oben genannte Individualfertigung (keine Serien) machen Performance-Analysen schwierig. Denn zum Einen ändert sich die Produktionssituation ständig, und das in nicht reproduzierbarer Weise; zum Anderen gibt es aber auch eine starke Beeinflussung der Einzelprodukte untereinander: Ein und dasselbe Produkt kann schnell oder langsam durch die Anlage laufen, je nachdem wie gut es sich mit den unmittelbar vorhergehenden oder nachfolgenden Produkten "verträgt". (Es geht hierbei vor Allem um die Maschinen- und Personal-Auslastung; die klassische Fertigungsstraßen-Aufgabenstellung zur Minimierung der Werkzeugumrüstzeiten spielt hier eine eher untergeordnete Rolle).
Wenn nun die Leistung einer solchen Produktionsanlage weit unter den Erwartungen liegt, kann das vielfältige Ursachen haben, so z.B.:
- Einzelne Maschinen sind zu langsam.
- Einzelne Maschinen haben zu viele Störungen.
- Störungen werden vom Personal nicht rasch genug behoben (Prioritäten des Personals ungünstig).
- Ungünstige Verfahr-Wege führen dazu, dass sich Anlagenteile gegenseitig behindern (falsche Ablaufplanung).
- Das Personal schafft es nicht, gewisse manuelle Arbeitsgänge rechtzeitig abzuschließen.
- Benötigtes Zusatzmaterial (Einbauteile) steht nicht rechtzeitig bereit.
- Aus irgendwelchen Gründen wirken die Zwischenpuffer nicht so wie ursprünglich geplant.
- Die Zwischenpuffer sind zu klein.
- Die Kombination verschiedener Produkte auf einer Produktionseinheit (Produktions-Palette) ist ungünstig.

Die genannten Ursachen (und viele weitere) kommen bei den meisten Anlagen in irgendeiner Form zum Tragen. Bei hochautomatisierten Anlagen ist es nun aber sehr schwierig festzustellen, welche Verzögerungsursachen nun tatsächlich relevant sind. Denn eine Störung an einer Maschine kann für die Gesamtproduktionsleistung völlig irrelevant sein, wenn, trotz Störung, der folgende Zwischenpuffer nie leer wird, bzw. vor dem Leerwerden bereits wieder bis zum Kapazitätsmaximum aufgefüllt worden ist.
Die tatsächliche Auswirkung einer Verzögerung lässt sich aber durch alleiniges Beobachten der Produktion oft nicht erkennen, da Auswirkungen erst zu einem späteren Zeitpunkt und an einem anderen Ort in der Anlage beurteilt werden können.

Es wurde auch schon versucht, durch Digitalkamera-Aufzeichnungen eine profundere Analyse durchzuführen. Da Digitalkameras aber immer nur einen Ausschnitt der Anlage zeigen, ist es kaum möglich diese Informationsvielfalt so in Relation zu setzen, dass Zusammenhänge wirklich erkennbar werden. Noch schwerwiegender ist aber, dass Kamera-Aufzeichnungen keine hinreichende Information über eine eventuelle Stillstands-Ursache geben: Es fehlt die Kenntnis der beteiligten inneren Maschinenzustände, sowie der Freigabe- und Sensorik-Signale; auch der Bezug zu den zugehörigen Produktions-Daten lässt sich nur schwer herstellen.

Ein anderer Analyse-Ansatz geht über ausführliche tabellarische Aufzeichnungen der Taktzeiten und der aufgetretenen Fehler. Die Taktzeittabellen haben zweifelsohne eine gewisse Aussagekraft, wenn es um die Abschätzung von produktbezogenen Kosten geht: Man kann z.B. feststellen, dass gewisse Produkttypen an Handnacharbeitsplätzen im Mittel länger verweilen als andere Produkttypen; eine solche Feststellung erlaubt es gewisse Schlüsse für die Preisbildung zu ziehen. Es ist aber schwierig, Taktzeit-Tabelle, Störungs-Tabellen und andere tabellarischen Logaufzeichnungen so verknüpft zu betrachten, dass hier Kausalitäten in quantifizierbarer Form deutlich werden.

Insgesamt muss man also feststellen, dass bei hochautomatisierten Anlagen mit starker Produktvariabilität alle heute verfügbaren Werkzeuge nicht ausreichen, um die Ablauf-Performance rasch zu verstehen, insbesondere wenn es um Anlagen mit mehreren autonomen Unterbereichen geht.

Die Aufgabe der vorliegenden Erfindung besteht daher darin, eine bessere Analysemöglichkeit zu schaffen, um im Nachhinein Verzögerungen bzw. Staus im Produktionsablauf schnell erkennen zu können. Insbesondere geht es also um die Produktionsoptimierung.

Diese Aufgabe wird für eine Produktionsanlage mit den Merkmalen des Oberbegriffes von Anspruch 1 gelöst. Diese Produktionsanlage kennzeichnet sich erfindungsgemäß durch einen Massenspeicher, in dem die Zustandsdaten - umfassend die Datenbelegung der Paletten inklusive der zugehörigen CAD-Daten - der Produktionsanlage zeitindexiert über einen über die Produktionszeit eines Teiles hinausgehenden Zeitraum abspeicherbar sind, und durch eine elektronische Rechnereinheit sowie eine Anzeigeeinrichtung, über die die im Massenspeicher abgespeicherten historischen Zustandsdaten zusammen mit einer schematischen grafischen Darstellung der Palettenumlaufanlage und der Bewehrungsanlage der Produktionsanlage abrufbar und grafisch anzeigbar sind.

Das Wesentliche an dieser Neuerung ist die grafische Darstellung der historischen Aufzeichnungen. Denn lange schon gibt es bei Umlauf-Leitrechnern Analysen in Tabellenform, die Taktzeiten und Ähnliches auflisten. Die grafische Darstellung der historischen Daten ermöglicht aber eine ganz neue, wesentlich gesteigerte Qualität der Analyse. Diese Darstellung zeigt Zusammengänge und Kausalitäten auf, die bei einer Analyse von tabellarischen Daten nur mit unrealistisch hohem Aufwand ergründet werden könnten.

Mit anderen Worten besteht die Neuerung nun darin, eine grafische Umlaufansicht zu implementieren, die nicht den aktuellen Zustand visualisiert, sondern einen vergangenen ("historischen") Zustand, wobei der Bezugszeitpunkt beliebig gewählt werden kann. Besonders nützlich wird diese historische Darstellung, wenn sie filmartig abgespielt wird, entweder mit originaler Geschwindigkeit oder in Zeitraffer. Durch nachträgliche Betrachtung des Ablaufs kann analysiert werden wann es Verzögerungen gab. Da Freigaben und ähnliche Signale ebenfalls angezeigt werden, können meistens die Begleitumstände einer Verzögerung schnell erkannt werden. Erfindungsgemäß ist auch vorgesehen, dass die Produktionsanlage eine Vielzahl von Taktplätzen aufweist, an denen jeweils ein Arbeitsgang bei der Herstellung der Teile wie Beton bzw. Bewehrungselemente durchführbar ist. Als zu den Taktplätzen äquivalent können auch Pufferspeicher bzw. einfach Lagerplätze angesehen werden, in denen zwar kein eigentlicher Arbeitsgang durchgeführt wird, aber dennoch ein Teil eine gewisse Zeit lang gelagert ist.

Besonders bevorzugt kann weiters vorgesehen sein, dass die elektronische Rechnereinheit Teil des Leitrechners ist. Das heißt, es soll prinzipiell nicht ausgeschlossen werden, dass die Rechnereinheit komplett separat vom eigentlichen Leitrechner ausgeführt ist, es ist jedoch bevorzugt vorgesehen, dass die Rechnereinheit in den Leitrechner integriert ist.

In ähnlicher Art und Weise gilt dies für die Anzeigerichtung, wobei dabei vorgesehen sein kann, dass die aktuellen Zustandsdaten auf derselben Anzeigeeinrichtung wie die historischen Zustandsdaten darstellbar sind.

Für Aufbau und Aussehen der grafischen History-Darstellung gibt es natürlich unzählig viele Möglichkeiten. Besonders interessant ist es aber, im Wesentlichen exakt dieselbe Darstellung zu verwenden, die bereits für die laufende Visualisierung des aktuellen Zustandes eingesetzt wird. Ebenso gut kann es aber notwendig und sinnvoll sein, für die historische und die aktuelle Umlaufdarstellung einen ganz unterschiedlichen Bildaufbau anzusetzen.

Um eine möglichst übersichtliche und für einen Bediener schnell realisierbare Darstellung zu ermöglichen, ist deshalb bevorzugt vorgesehen, dass für die Darstellung auf der Anzeigeeinrichtung zwischen einer aktuellen Ansicht und historischen Ansicht auswählbar ist, wobei in der historischen Ansicht die schematische grafische Darstellung der Produktionsanlage mit historischen Zustandsdaten im Wesentlichen mit der schematischen grafischen Darstellung der Produktionsanlage mit aktuellen Zustandsdaten übereinstimmt.

Weiters kann vorteilhaft vorgesehen sein, dass in der historischen Ansicht gegenüber der aktuellen Ansicht zusätzlich die Restverweildauer zu jedem in Herstellung befindlichen Teil am jeweiligen Taktplatz anzeigbar ist. Dies ist natürlich erst in der Nachhineinbetrachtung möglich, da erst dann aufgrund der gespeicherten Daten die Restverweildauer auslesbar und anzeigbar ist.

Um eine noch übersichtlichere Darstellung zu erreichen, kann vorgesehen sein, dass in der historischen Ansicht neben der Produktionsanlagendarstellung ein Feld zur Anzeige taktplatzbezogener und/oder teilebezogener Daten dargestellt ist. Dabei kann die Darstellung so ausgeführt sein, dass sich bereits bei Überfahren eines bestimmten Taktplatzes mit dem Mauszeiger die entsprechenden Daten im Datenfeld ändern. Grundsätzlich sei hierzu darauf hingewiesen, dass eine Bedienung über eine Maus und eine Tastatur erfolgen kann. Es soll aber auch nicht ausgeschlossen sein, dass die Anzeigeeinrichtung eine berührungsempfindliche Oberfläche aufweist.

Besonders wichtig für das einfache Hin- und Herspringen zwischen historischen Zeitpunkten ist erfindungsgemäß vorgesehen, dass in der historischen Ansicht ein Feld zur Anzeige eines zeitmäßig der Produktionsanlagendarstellung entsprechenden Zeitpunkts dargestellt ist. Ein besonderer erfindungsgemäßer Vorteil ergibt sich dabei dann, wenn das Zeitpunktanzeigefeld Teil eines Abspielfeldes zum gezielten Eingeben bzw. Auswählen eines Zeitpunkts und zum, vorzugsweise filmmäßigen, Abspielen mehrerer, vorzugsweise in gleichen Zeitabständen auseinander liegender, Zeitpunkte ist.

Die Verweilzeiten der Paletten auf den einzelnen Taktplätzen können natürlich angezeigt werden; daneben hat man zusätzlich die Möglichkeit anzuzeigen wie lang eine Palette noch stehen bleibt, nachdem der folgende Taktplatz gemeldet hat, bereit zu sein, die Palette aufzunehmen. Tatsächlich kann man in der historischen Betrachtung sogar Zeitintervalle zu zukünftigen Ereignissen anzeigen, so z.B. wie lange es dauern wird, bis für eine bestimmte Palette die Bewehrung bereit stehen wird.

Zu beachten ist auch, dass wesentliche Analyse-Erkenntnisse gerade dadurch gewonnen werden können, dass Anlagenzustände im Nachhinein betrachtet werden: Man kann beispielsweise bei einer beobachteten Störung schnell ermitteln, ob diese Auswirkungen auf die Produktionsleistung hatte, indem man durch gezieltes "Vorspulen" des "Films" untersucht, ob der Störungs-Stillstand an den nachfolgenden Umlauf-Stationen wettgemacht werden konnte. Die solcherart gewonnenen Analyse-Erkenntnisse helfen, technisch und organisatorisch bedingte Engpässe der Produktionsanlage zu erkennen und nach Wegen zu suchen, die Produktivität entscheidend zu steigern.

Grundsätzlich sind mehrere Varianten möglich, um in der historischen Ansicht Fehler zu finden. Erstens kann einfach ein bestimmter Zeitpunkt angegeben werden und zu diesem Zeitpunkt geschaut werden, ob ein Fehler vorliegt. Zweitens ist es auch möglich, über eine bestimmte Zeitspanne einen Film laufen zu lassen und auf Fehlermeldungen zu achten. Drittens ist es auch möglich, spezielle Fehler als Suchbegriffe einzugeben, wonach als Suchergebnis die Zeitpunkte ausgegeben werden, an denen ein solcher Fehler aufgetreten ist.

Demgemäß kann bevorzugt vorgesehen sein, dass in der historischen Ansicht zu jedem Taktplatz bzw. jedem Teil eine Verzögerungszeit anzeigbar ist, die der Verweildauer des Teils am Taktplatz seit der Freigabe zum Weiterfahren zum nächsten Taktplatz entspricht. Eine solche Verzögerungszeit entspricht einem Fehler im Produktionsablauf. Um diesen in der historischen Ansicht (kann auch "History View" genannt werden) gut erkennbar darzustellen, kann bevorzugt vorgesehen sein, dass sich mit der Anzeige der Verzögerungszeit die farbliche Darstellung bzw. Hinterlegung des betreffenden Taktplatzes ändert.

Ein weiterer Fehler kann erfindungsgemäß dadurch kenntlich gemacht werden, dass jedem Teil eine bestimmte Normal-Verweildauer an einem Taktplatz zugeordnet ist, wobei bei über dieser Normal-Verweildauer hinausgehender Verweilzeit eines Teils ein Warnsignal, vorzugsweise durch farbliche Änderung des Taktplatzes, ausgebbar ist. Eine solche Vorgehensweise ist aber nur dann möglich, wenn wirklich im Vorhinein bei der Produktion zu jedem einzelnen Teil bereits die Normalverweildauer feststeht und diese auch in das Darstellungsprogramm eingegeben wird.

Auch beim Lagern können Fehler auftreten. Dabei kann vorgesehen sein, dass die Produktionsanlage zumindest einen Pufferspeicher für Teile aufweist, wobei der Füllgrad des zumindest einen Pufferspeichers anzeigbar ist und bei zu niedrigem oder zu hohen Füllgrad ein - vorzugsweise in der historischen Ansicht grafisches - Warnsignal ausgebbar bzw. anzeigbar ist.

Um nun eine optimale und schnelle Analysemöglichkeit zu erhalten, kann bevorzugt vorgesehen sein, dass, vorzugsweise nur in der historischen Ansicht, über ein Fehlersuchfeld zurückliegende Fehler wie Verzögerungszeit, Verweildauer-Warnsignal und/oder Pufferspeicher-Warnsignal auffindbar sind und entsprechend grafisch anzeigbar sind.

Um die genannte grafische "History"-Darstellung realisieren zu können, muss der Produktionsablauf mit allen benötigten Details abgespeichert werden. Um eine raschen Zugriff auf diese sehr umfangreiche Datenmenge zu ermöglichen, bietet sich die Verwendung von relationalen Datenbanken an; ebenso gut könnten aber auch listenartige Text-Dateien (Logfiles) oder andere Speicherformate eingesetzt werden. Das alleinige Abspeichern der genannten Informationen stellt aber noch keine wesentliche Innovation dar; es ist viel mehr Mittel zum Zweck um die grafische Darstellung des historischen Verlaufs realisieren zu können.

Der Graphical Performance Analyzer (kurz GPA) ist eine Einrichtung, die alle wichtigen Bewegungen, Signale und Zustände einer dynamischen Fertigungsstraße mitprotokolliert und dann in einer grafischen Anzeigeeinheit wiedergibt, und zwar so aufbereitet, dass die Ursachen von Produktionsverzögerungen und Ablaufengpässen gut erkennbar sind.

Der GPA beinhaltet zunächst eine sehr leistungsfähige Speichereinheit, in der alle relevanten Zustandsänderungen und Abläufe mit-protokolliert werden. Hier werden die Bewegungen der Produktionspaletten aufgezeichnet und ihre zeitlich veränderliche Verknüpfung (Zeitindexierung) mit spezifischen Produktionsdaten. Ebenso werden aber auch alle wichtigen Maschinenzustände mit ihrer zeitlichen Veränderung festgehalten (Freigabe-Signale, Lichtschranken, Fehler-Zustände und Fehler-Quittierungen, Handeingriffszustände und vieles mehr).

Die Speichereinheit des Leitrechners bzw. des GPA sollte so implementiert werden, dass sie sehr große Datenmenge aufnehmen kann, gleichzeitig aber einen sehr schnellen wahlweisen Zugriff erlaubt. Es muss möglich sein, den Zustand eines beliebigen Zeitpunktes sehr schnell abzurufen. Beliebiges Springen von einem Zeitpunkt zum anderen sollte ohne störende Zugriffszeiten erfolgen. Die Datenmenge wird in jedem Fall beachtlich sein, denn um gut analysieren zu können, benötigt man mindestens den Verlauf der letzen Tage oder Wochen; idealerweise sollte der Speicher sogar die Information mehrerer Jahre fassen können.

Der zweite Teil des GPA ist eine grafische Anzeigeeinheit, auf der die abgespeicherten Daten angezeigt werden können, und zwar in Form eines schematischen Umlaufbildes, das den Zustand der Anlage visualisiert. Hier kann man jeden beliebigen Zeitpunkt einstellen und sieht so den Ist-Zustand dieses Zeitpunktes. Man kann nun auch filmartig vor- und zurückspulen, um so den Ablauf mit einstellbarem Zeitraffer zu beobachten.

Das Wesentliche an der GPA-Anzeige ist, dass es sich um eine grafische Darstellung historischer Verläufe handelt. Hier gibt es einerseits eine Abgrenzung zu tabellarischen und textförmigen Log-Listen. Auf der anderen Seite handelt es sich nicht um eine simple grafische Darstellung des Ist-Zustandes, sondern um eine Darstellung des historischen Verlaufes. Das Besondere dieser Anzeige wird deutlich, wenn man auflistet, welche Informationen hier in übersichtlicher Weise für jeden beliebigen Zeitpunkt angezeigt werden können:
a) Position aller Produktionspaletten.
b) Datenbelegung der Produktionspaletten, inklusive aller auch noch so feinen Details der zugehörigen CAD-Daten.
c) Freigabe zum Weiterfahren an den einzelnen Taktplätzen.
d) Zustände der Lichtschranken und anderer relevanter Sensoren.
e) Handbedienungszustände von Maschinenteilen.
f) Verweildauer I: wie lange steht eine Palette bereits auf einem Taktplatz.
g) Verweildauer II: wie lange hat eine Palette bereits vom Folgetaktplatz die Freigabe weiterzufahren (Dieser Wert ist viel entscheidender als die Verweildauer I, da erst bei erfolgter Freigabe von einer möglichen Verzögerung gesprochen werden kann).
h) Warnungsanzeige die rasch erkennen lässt, ob irgendwo in der Anlage eine Verweildauer ein voreinstellbares Limit überschreitet. Diese Funktion ist sehr wichtig, und es kann sogar sinnvoll sein, eine Komponente einzubauen, mit der automatisch Zeitpunkte gesucht und visualisiert werden können, in denen eine solche Warnungsbedingung aktiv war.
i) Anzeige des zeitlichen Abstandes zu beliebigen (auch zukünftigen) Ereignissen. So kann man beispielsweise anzeigen, dass die Bewehrung zu einer in Nachschalung befindlichen Palette erst 15 Minuten später bereit stehen wird; es ist dann nachvollziehbar, wenn das Personal den Nachschalvorgang mit nur verminderter Priorität vorantreibt.
j) Anzeige des Füllgrades der Zwischenpuffer. Auch hier wird es sinnvoll sein, ganz volle und ganz leere Puffer besonders optisch zu kennzeichnen und über spezielle Funktionen solche Situationen systematisch aufspüren zu können.

Für die Ausführung der Speichereinheit des GPA muss berücksichtigt werden, dass man eine sehr große Datenmenge hat, auf die man uneingeschränkt mit beliebigen Zeitsprüngen zugreifen möchte. Hier ist es naheliegend eine relationale Datenbank einzusetzen und den wahlfreien Zugriff über entsprechende Datenbank-Indizes zu realisieren. Eine gute Indizierung reicht aber noch nicht aus: Man muss ein Design finden, das es ermöglicht mit wenigen Zugriffen alle Informationen eines Zeitpunkts abzurufen, ohne hierbei übermäßig viel Redundanz im Speicher zu halten.

Die Bedeutung dieser Aufgabe wird klar, wenn man bedenkt, dass es bei großen Anlagen mehrere Zustandswechsel pro Sekunde geben kann, wobei die aufgezeichneten Daten idealerweise nie gelöscht werden müssen und so über Jahre hinweg anwachsen. Trotz dieser Datenmenge sollte jeder beliebige Zeit-Sprung in einigen Millisekunden möglich sein, um einerseits ein flüssiges filmartiges Zeitraffer-Abspulen zu ermöglichen und um andererseits schnell und automatisch nach "Warn-Zuständen" suchen zu können, die dann näher analysiert werden sollen.

Grundsätzlich ist der Ansatz über relationale Datenbanken nur eine Möglichkeit der technischen Realisierung der Speichereinheit. Auch andere Varianten sind denkbar.

Bei der Realisierung der grafischen Anzeigeeinheit hat man natürlich viele Darstellungsmöglichkeiten. Besonders interessant ist es aber, die weitgehende Übereinstimmung mit der aktuellen Umlaufanzeige zu suchen. Die aktuelle Umlaufanzeige ist eine grafische schematische Darstellung des momentanen Ist-Zustandes der Anlage. Die meisten Steuerungsleitrechner haben eine solche Funktionalität, um alle relevanten Systemzustände übersichtlich zu visualisieren. Wenn man nun die Anzeige des aktuellen Ist- Zustandes und die Anzeige des historischen Verlaufs in Einklang bringt, hat man einen doppelten Vorteil:
- Der Benutzer hat im GPA eine Benutzeroberfläche, die weitgehend kompatibel zu jener ist, die er bereits von der normale Anlagensteuerung her kennt.
- Die aufwendige Konfigurationsarbeit für die grafische Darstellung muss nur einmal gemacht werden; diese Konfiguration kann dann sowohl für die aktuelle Umlaufanzeige als auch für die GPA-Anzeige verwendet werden.

Die Kompatibilität zwischen aktueller Anzeige und GPA-Anzeige ist aber unter Umständen technisch nicht immer leicht realisierbar; diese Kompatibilität ist daher nicht zwingend, sondern einfach nur eine Möglichkeit mit besonderen Vorzügen.

Weitere Einzelheiten und Vorteile der vorliegenden Erfindung werden anhand der Figurenbeschreibung unter Bezugnahme auf die in den Zeichnungen dargestellten Ausführungsbeispiele im Folgenden näher erläutert. Darin zeigen:
- Fig. 1: in einer schematischen Darstellung eine Produktionsanlage,
- Fig. 2: einen auf einer Anzeigeeinrichtung dargestellte aktuelle Ansicht,
- Fig. 3: eine auf einer Anzeigeeinrichtung dargestellte historische Ansicht,
- Fig. 4: ein Datenanzeigefeld und ein Zeitpunktanzeigefeld und
- Fig. 5 bis Fig. 11: die Entstehung und historische Analyse einer Verzögerung.

Fig. 1 zeigt generell eine Produktionsanlage P mit einer Palettenumlaufanlage PU und einer Bewehrungsanlage BA zur automatischen Herstellung von Teilen T, wie Matten, Gitterträger, Betonelemente und Ähnliches. Die einzelnen Teile T werden dabei auf Paletten C vom Taktplatz TP zu Taktplatz TP transportiert. Im Speziellen wird in Fig. 1 eine Palettenumlaufanlage PU zur Herstellung von bewehrten Betonelementen und Bewehrungselementen gezeigt. Im oberen Bereich PU der Produktionsanlage P werden dabei die einzelnen Schalungselemente auf den Paletten C aufgebracht, wobei nahezu auf jeder Palette C zueinander unterschiedliche Formen für spätere Betonelemente angelegt werden. In dieser Palettenumlaufanlage PU werden in der Pufferstation U₁ gesäuberte Umlaufpaletten C für den schnellen Zugriff reserviert. In der Pufferstation U₂ werden Paletten für den Betoniervorgang vorbereitet.

Im unteren Bereich der Produktionsanlage P ist die Bewehrungsanlage BA zur Herstellung von Matten und Gitterträgern gezeigt, wobei auf jedem Taktplatz TP unterschiedlichste Arten und Formen von Bewehrungsmatten und Bewehrungsgittern produziert werden, welche im Pufferspeicher U₃ zwischengelagert werden können. Hier müssen rechtzeitig die Bewehrungen bereitstehen, die von der Bewehrungsanlage BA vorbereitet werden.

Im Bereich der Bewehrungsübergabestation Ü der Produktionsanlage P wird die Bewehrung der einzelnen Umlaufpalette C übergeben. In der Betonierstation K muss rechtzeitig Beton bereitstehen, der von der Betonmischanlage vorbereitet wird. Nach dem Zusammenfügen bzw. "Verheiraten" der einzelnen Komponenten werden die hergestellten Teile T in einer Trockenkammer TK getrocknet.

In der gesamten Produktionsanlage P sind unterschiedlichste, hier nicht dargestellte Sensoren bzw. sonstige Messanlagen und Steuerelemente zur Aufnahme von Sensordaten, Steuerdaten, Fehlerdaten usw. angeordnet, wobei sämtliche Informationen an einen Leitrechner L weitergeleitet werden. In umgedrehter Art und Weise kann natürlich auch der Leitrechner L an den einzelnen Taktplätzen TP Steuer- oder Regelvorgänge durchführen. Der Leitrechner L weist auch einen Speicher S auf, in dem die einzelnen Daten D zeitindexiert abgespeichert werden. In diesem Speicher S werden nicht nur die aktuellen Zustandsdaten Dₐₖₜ abgespeichert, sondern auch die historischen Zustandsdaten Dₕᵢₛₜ mit dem entsprechenden Zeitpunkt t₁, t₂ bis tₙ abgespeichert. Bei bisherigen Ausführungen konnte über eine Anzeigeeinrichtung A die aktuelle schematische Ansicht Gₐₖₜ der Produktionsanlage P dargestellt werden. Mit der nunmehr vorliegenden Erfindung kann über den Leitrechner L selbst oder bevorzugt über eine separate Rechnereinheit R und einer dazugehörigen Anzeigeeinrichtung A' sowohl die aktuelle Ansicht Gₐₖₜ als auch die historische Ansicht Gₕᵢₛₜ (abwechselnd oder nebeneinander) dargestellt werden.

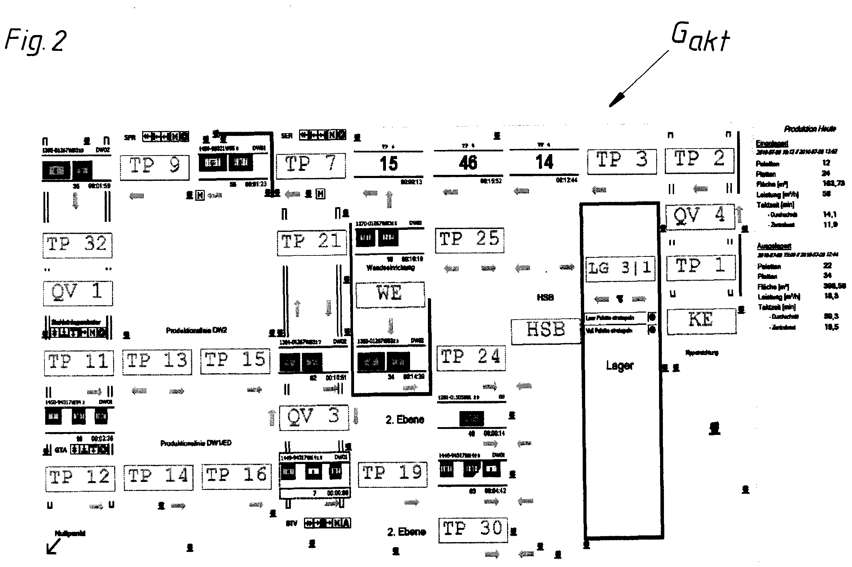

Fig. 2 zeigt eine aktuelle Ansicht Gₐₖₜ, wie sie auf bisherigen und zum Stand der Technik gehörenden Produktionsanlagen bereits bekannt war. Dabei sind im gesamten linken Bereich einzelne Taktplätze TP mit den jeweiligen in Herstellung befindlichen Teilen T schematisch dargestellt. Im rechten Bereich ist der aktuelle Produktionsstatus angezeigt. Es wird hierzu nicht näher auf die einzelnen Punkte der Darstellung eingegangen. Die grafische Umlaufdarstellung zeigt (typischerweise) die Paletten an, die aktuell an den einzelnen Umlauftaktplätzen positioniert sind; dazu werden meistens auch Freigaben zum Weiterfahren auf die Folgestation, Fehlerzustände, Lichtschrankenzustände u. Ä. visualisiert. Man erkennt aus dieser grafischen Darstellung aber nur, ob es irgendwo im Umlauf aktuell einen Stau gibt.

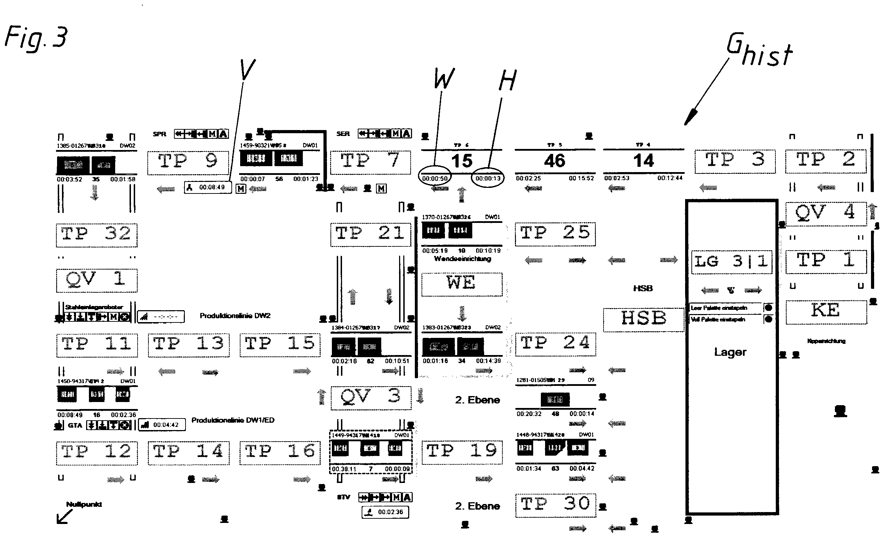

Demgegenüber zeigt die Fig. 3 eine historische - also rückblickende und damit nicht aktuelle - Ansicht Gₕᵢₛₜ derselben Produktionsanlage P, wobei als wesentlicher Unterschied bereits zu erkennen ist, dass nicht nur an jedem Taktplatz TP die bisherige Zeit H angezeigt ist, sondern auch die Restverweildauer W der einzelnen Teile T am Taktplatz TP. Zusätzlich ist auch die Verzögerungszeit V ersichtlich.

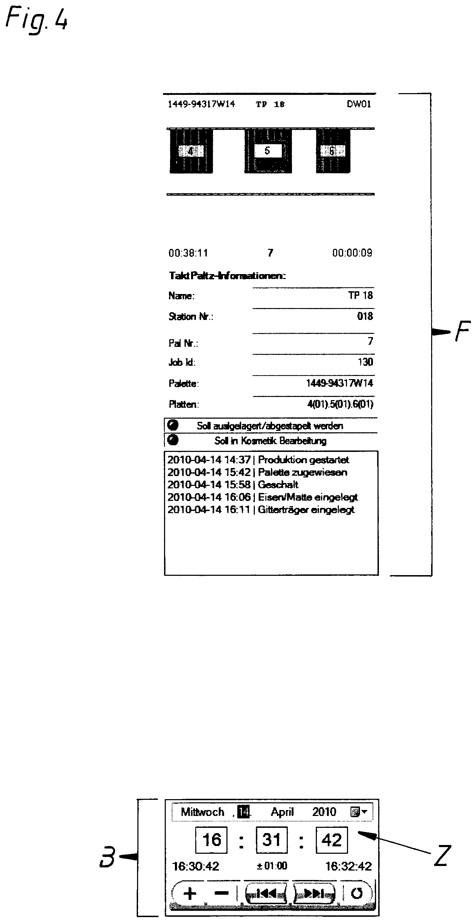

In Fig. 4 sind auch die zusätzlichen vorhandenen Felder F und B in der historischen Ansicht Gₕᵢₛₜ dargestellt, wobei diese bevorzugt neben der schematischen grafischen Darstellung der Produktionsanlage P angezeigt werden. Im Anzeigefeld F werden dabei taktplatzbezogene und/oder teilebezogene Daten dargestellt. Es ist hierbei ersichtlich, zu welchen Zeitpunkten auf der Palette mit der Nummer 7 einzelne Arbeitsgänge durchgeführt wurden und dass sich die Palette mit der Nummer 7 derzeit am Taktplatz 18 befindet. Im unteren Bereich ist das Abspielfeld B dargestellt, wobei dieses Abspielfeld B auch ein Zeitpunktanzeigefeld Z beinhaltet. In diesem Zeitpunktanzeigefeld Z kann ein Bediener zu beliebigen, in der Vergangenheit liegenden Zeitpunkten t springen. Über die darunter liegenden Flächen kann auch ein Vor- und Zurückspulen erfolgen, wobei die schematische grafische Darstellung im hier nicht dargestellten linken Bereich immer mit dem Zeitpunkt t übereinstimmt. Dazu muss natürlich zu jedem Zeitpunkt t eine Information zu jedem einzelnen Taktplatz TP und zu jedem einzelnen Teil T zeitindexiert vorhanden sein bzw. im Speicher S gespeichert sein.

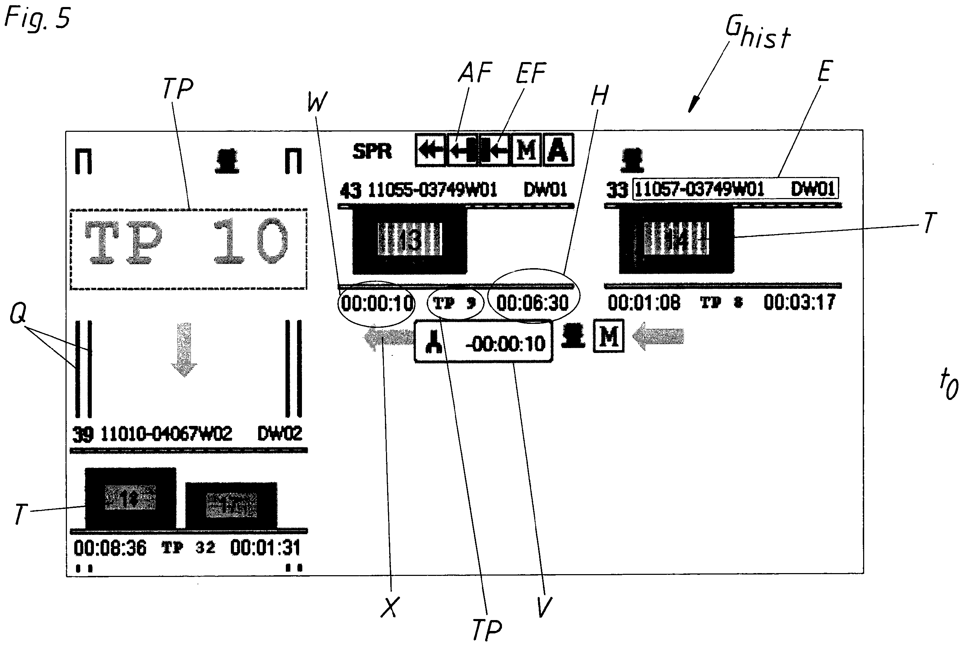

In den Fig. 5 bis 11 ist jeweils ein Ausschnitt aus der historischen Ansicht Gₕᵢₛₜ mit den Taktplätzen TP8, TP9, TP10 und TP32 dargestellt, wobei in den Darstellungen eine Stauentstehung bzw. Verzögerungsentstehung ersichtlich ist. Zur Erklärung befindet sich gemäß Fig. 5 auf dem Taktplatz TP9 die Palette C mit der Palettennummer 43 und auf Taktplatz TP8 die Palette C mit der Nummer 33. Auf der Palette Nummer 43 befindet sich das Teil 13, während sich auf der Palette mit der Nummer 33 das Teil 14 befindet. Rechts unterhalb der Darstellung ist die bisherige Verweilzeit H des Teils 13 bzw. der Palette 43 am Taktplatz 9 ablesbar, während auf der linken Seite die Restverweilzeit W ersichtlich ist. Die Zahlenkolonne rechts von der Palettennummer entspricht elementsspezifischen Daten E. Oberhalb dieser Elementdaten E ist am Taktplatz 9 die Auslassfreigabe AF und die Einlassfreigabe EF dargestellt, wobei diese manuell (M) durch am Taktplatz arbeitende Mitarbeiter oder automatisch (A) erfolgen kann. Wenn die Freigabe erfolgt ist, wird der Transportpfeil X dargestellt, wobei der Transport über Förderbänder oder auch über Querversetzer Q erfolgen kann.

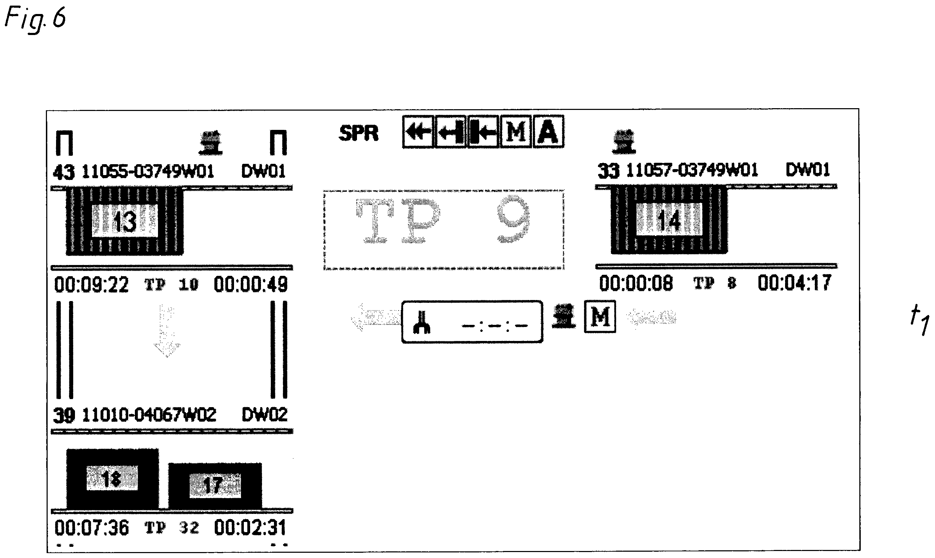

Gegenüber dem in Fig. 5 dargestellten Zeitpunkt t₀ ist in Fig. 6 bereits der Zeitpunkt t₁ dargestellt, welcher der schematischen grafischen Darstellung eine Minute nach dem Zeitpunkt t₀ entspricht. In dieser Fig. 6 erkennt man, dass die Palette 43 seit 49 Sekunden auf dem aktuellen Taktplatz TP10 steht. Links unter dem Taktplatz steht, dass die Palette noch 9 Minuten und 22 Sekunden an dieser Stelle stehen wird. Diese Information ist grundsätzlich nur in der nachträglichen Ablaufbetrachtung (historische Ansicht Gₕᵢₛₜ) verfügbar. Da die Gesamtverweilzeit von über 10 Minuten für den betreffenden Taktplatz TP10 zu lang ist, werden die Werte beispielsweise rot dargestellt. Es kann auch der Taktplatz rot hinterlegt werden. Natürlich sind auch andere Signalfarben oder andere Hervorhebungen möglich. Wenn bei einer nachträglichen Betrachtung eine solche Situation auftritt, ist es also sinnvoll, sich den Ablauf weiter anzusehen, um zu verstehen, warum es zu der langen Verweilzeit gekommen ist.

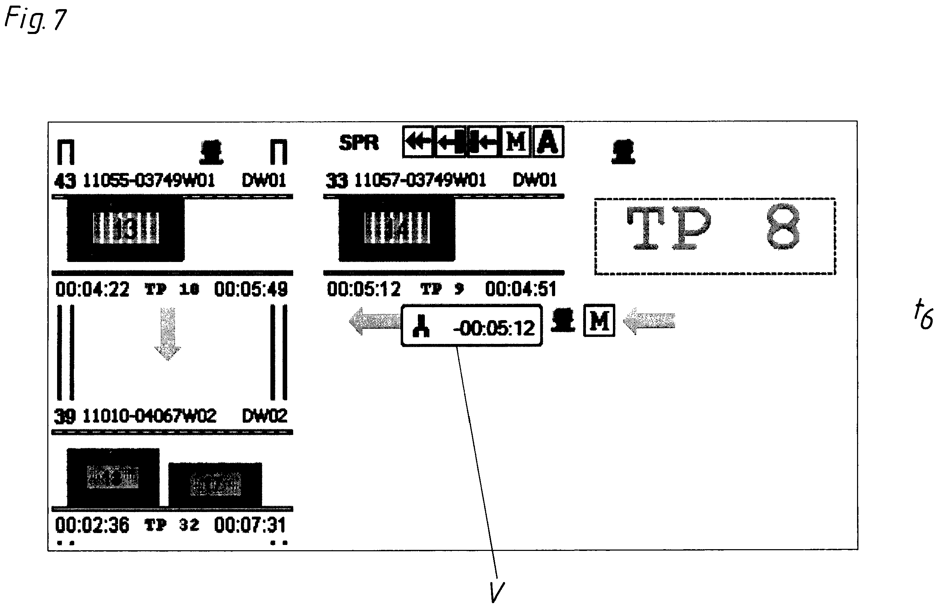

In Fig. 7 ist ersichtlich, dass die Palette mit der Nummer 33 bereits auf den Taktplatz TP9 weitergewandert ist, wobei diese Palette bereits längst die Freigabe zum Weiterfahren hat. Zu diesem Zeitpunkt t₆ (entspricht 6 Minuten nach Zeitpunkt t₀) ist bereits ersichtlich, dass die Palette 33 noch 5 Minuten und 12 Sekunden Verzögerungszeit V bis zur Weitergabe hat.

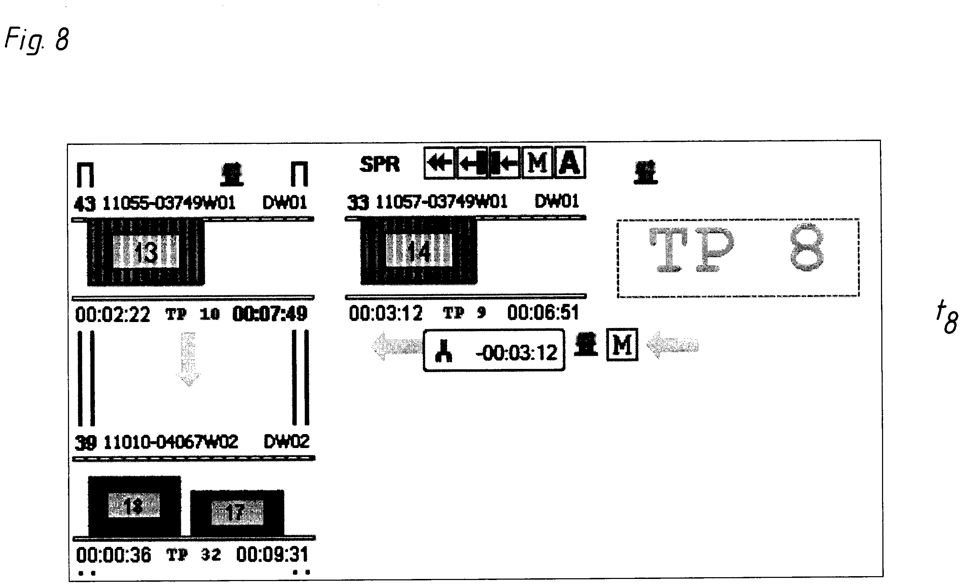

In Fig. 8 ist immer noch dieselbe Stausituation zum 2 Minuten später liegenden Zeitpunkt t₈ ersichtlich.

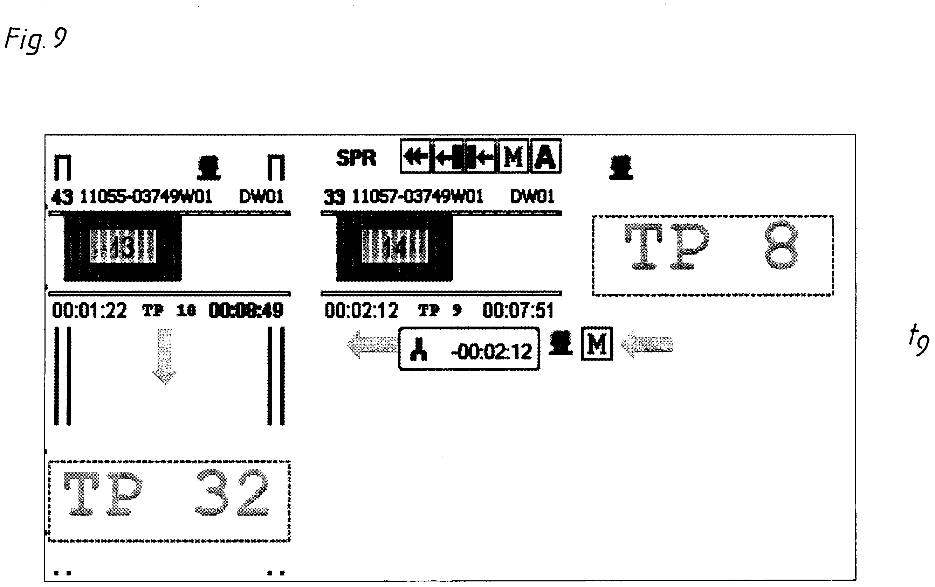

Dagegen ist in Fig. 9 zum Zeitpunkt t₉ ersichtlich, dass der Taktplatz 32 bereits wieder frei wäre, dennoch aber die Palette 43 am Taktplatz 10 verbleibt. Folglich ist die Stausituation am Taktplatz 9 nicht vom Taktplatz 32 sondern vielmehr vom Taktplatz 10 abhängig. Die lange Verweilzeit der Palette 43 ist also keine Folge eines Staus, sondern wird direkt durch eine zu lange Bearbeitung auf der betreffenden Station verursacht. Die Station wird daher zunächst mit einem orangen Warnrechteck umrandet.

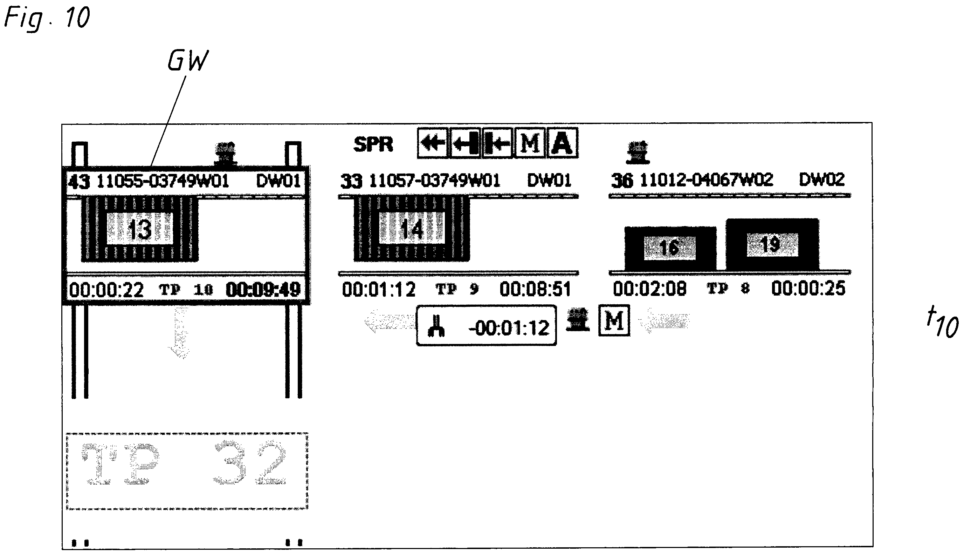

Je nach Zeitverzögerung können auch unterschiedliche Farbwerte, z.B. orange oder rot, für unterschiedlich lange Zeitüberschreitungen der besseren Darstellung dienen. Aus diesem Grund ist auch in Fig. 10 zum Zeitpunkt t₁₀ der Taktplatz 10 rot hervorgehoben (grafisches Warnsignal GW) und bei einer Analyse muss genau darauf geachtet werden, warum die Verzögerung aufgetreten ist.

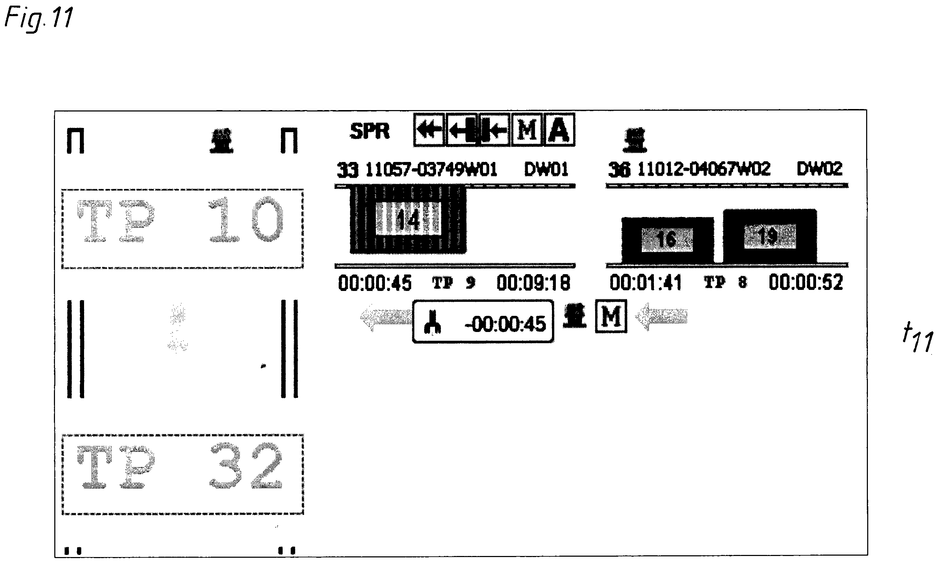

Abschließend ist noch in Fig. 11 der Zeitpunkt t₁₁ dargestellt, zu welchem die Palette 43 vom Taktplatz TP10 weitertransportiert wurde, aber aufgrund von Vorbereitungsarbeiten am Taktplatz 10 die Palette 33 noch eine kurze Wartezeit von 45 Sekunden bis zum Weitertransport zum Taktplatz TP10 warten muss.

## Patentansprüche

1. Produktionsanlage (P) zur automatisierten Herstellung von Teilen (T), mit
- einer Palettenumlaufanlage (PU) zur Herstellung von bewehrten Betonelementen, wobei die Betonelemente auf nahezu jeder Palette (C) der Palettenumlaufanlage (PU) zueinander unterschiedliche Formen aufweisen,
- einer Bewehrungsanlage (BA) zur Herstellung von Bewehrungselementen, wobei die Bewehrungselemente unterschiedliche Formen aufweisen,
- einem elektronischen Leitrechner (L), der mit Sensoren und Steuerungselementen der Produktionsanlage (P) in Verbindung steht und den Produktionsablauf steuert,
- mindestens einer Anzeigeeinrichtung (A) zur schematischen grafischen Darstellung der Produktionsanlage (P) und deren aktuellen Zustandsdaten (Dₐₖₜ),
**gekennzeichnet durch**
- einen Massenspeicher (S), in dem die Zustandsdaten (D) - umfassend die Datenbelegung der Paletten (C) inklusive der zugehörigen CAD-Daten - der Produktionsanlage (P) zeitindexiert über einen über die Produktionszeit eines Teiles (T) hinausgehenden Zeitraum abspeicherbar sind,
- eine elektronische Rechnereinheit (R)
- sowie eine Anzeigeeinrichtung (A'), über die die im Massenspeicher (S) abgespeicherten historischen Zustandsdaten (Dₕᵢₛₜ) zusammen mit einer schematischen grafischen Darstellung der Palettenumlaufanlage (PU) und der Bewehrungsanlage (BA) der Produktionsanlage (P) abrufbar und grafisch anzeigbar sind, wobei auf der Anzeigeeinrichtung (A, A') eine aktuelle Ansicht (Gₐₖₜ) der Produktionsanlagendarstellung und die im Massenspeicher (S) abgespeicherten historischen Zustandsdaten (Dₕᵢₛₜ) zusammen mit der schematischen grafischen Darstellung der Produktionsanlage (P) in einer historischen Ansicht (Gₕᵢₛₜ) grafisch anzeigbar sind, wobei in der historischen Ansicht (Gₕᵢₛₜ) ein Feld (Z) zur Anzeige eines zeitmäßig der Produktionsanlagendarstellung entsprechenden Zeitpunkts (t) dargestellt ist, wobei das Zeitpunktanzeigefeld (Z) Teil eines Abspielfeldes (B) zum gezielten Eingeben bzw. Auswählen eines Zeitpunkts (t) und zum Abspielen mehrerer Zeitpunkte (t₁, t₂, tₙ) ist und wobei eine Vielzahl von Taktplätzen (TP) vorgesehen ist, an denen jeweils ein Arbeitsgang bei der Herstellung der Teile (T) wie Beton- bzw. Bewehrungselemente durchführbar ist, wobei jedem Teil (T) eine bestimmte Normal-Verweildauer an einem Taktplatz (TP) zugeordnet ist, wobei bei über dieser Normal-Verweildauer hinausgehender Verweilzeit eines Teils (T) ein Warnsignal ausgebbar ist.

2. Produktionsanlage nach Anspruch 1, **dadurch gekennzeichnet, dass** die elektronische Rechnereinheit (R) Teil des Leitrechners (L) ist.

3. Produktionsanlage nach Anspruch 1 oder 2, **dadurch gekennzeichnet, dass** für die Darstellung auf der Anzeigeeinrichtung (A') zwischen der aktuellen Ansicht (Gₐₖₜ) und der historischen Ansicht (Gₕᵢₛₜ) auswählbar ist.

4. Produktionsanlage nach einem der Ansprüche 1 bis 3, **dadurch gekennzeichnet, dass** in der historischen Ansicht (Gₕᵢₛₜ) die schematische grafische Darstellung der Produktionsanlage (P) mit historischen Zustandsdaten (Dₕᵢₛₜ) im Wesentlichen mit der schematischen grafischen Darstellung der Produktionsanlage (P) mit aktuellen Zustandsdaten (Dₐₖₜ) übereinstimmt.

5. Produktionsanlage nach einem der Ansprüche 1 bis 4, **dadurch gekennzeichnet, dass** in der historischen Ansicht (Gₕᵢₛₜ) gegenüber der aktuellen Ansicht (Gₐₖₜ) zusätzlich die Restverweildauer (W) zu jedem in Herstellung befindlichen Teil (T) am jeweiligen Taktplatz (TP) anzeigbar ist.

6. Produktionsanlage nach einem der Ansprüche 1 bis 5, **dadurch gekennzeichnet, dass** in der historischen Ansicht (Gₕᵢₛₜ) neben der Produktionsanlagendarstellung ein Feld (F) zur Anzeige taktplatzbezogener und/oder teilebezogener Daten dargestellt ist.

7. Produktionsanlage nach einem der Ansprüche 1 bis 6, **dadurch gekennzeichnet, dass** in der historischen Ansicht (Gₕᵢₛₜ) zu jedem Taktplatz (TP) bzw. jedem Teil (T) eine Verzögerungszeit (V) anzeigbar ist, die der Verweildauer des Teils (T) am Taktplatz (TP) seit der Freigabe zum Weiterfahren zum nächsten Taktplatz (TP) entspricht.

8. Produktionsanlage nach Anspruch 7, **dadurch gekennzeichnet, dass** sich mit der Anzeige der Verzögerungszeit (V) die farbliche Darstellung bzw. Hinterlegung des betreffenden Taktplatzes (TP) ändert.

9. Produktionsanlage nach einem der Ansprüche 1 bis 8, **dadurch gekennzeichnet, dass** die aktuellen Zustandsdaten (Dₐₖₜ) auf derselben Anzeigeeinrichtung (A') wie die historischen Zustandsdaten (Dₕᵢₛₜ) darstellbar sind.

10. Produktionsanlage nach einem der Ansprüche 1 bis 9, **dadurch gekennzeichnet, dass** in der historischen Ansicht (Gₕᵢₛₜ) mehrere, vorzugsweise in gleichen Zeitabständen auseinander liegende, Zeitpunkte (t₁, t₂, tₙ) der historischen Ansicht (Gₕᵢₛₜ) der Produktionsanlagendarstellung filmartig abspielbar bzw. anzeigbar sind.

11. Produktionsanlage nach einem der Ansprüche 1 bis 10, **dadurch gekennzeichnet, dass** auf derselben Anzeigeeinrichtung (A') die aktuelle Ansicht (Gₐₖₜ) und die historische Ansicht (Gₕᵢₛₜ) entweder abwechselnd oder nebeneinander anzeigbar sind.

## Claims

1. A production facility (P) for automatically manufacturing parts (T), comprising
- a pallet carousel facility (PU) for manufacturing reinforced concrete elements, wherein the concrete elements on almost every pallet (C) of the pallet carousel facility (PU) have mutually different shapes,
- a reinforcement production facility (BA) for manufacturing reinforcement elements, wherein the reinforcement elements have different shapes,
- an electronic control computer (L), which is connected to sensors and control elements of the production facility (P) and controls the production functional sequence,
- at least one display device (A) for the schematic graphical representation of the production facility (P) and the current status data (Dₐₖₜ) thereof,
**characterized by**
- a mass data storage means (S), in which the status data (D) - comprising the date assigned to the pallet (C) including the associated CAD data - of the production facility (P) can be stored in a time-indexed manner over a period that goes beyond the production time for a part (T), and
- an electronic computer unit (R) and a display device (A'), by means of which the historical status data (Dₕᵢₛₜ) stored in the mass data storage device, together with a schematic graphical representation of the pallet carousel facility (PU) and the reinforcement production facility (BA) of the production facility (P), can be retrieved and displayed in graphical form, wherein a current view (Gₐₖₜ) of the production facility representation and the historical status data (Dₕᵢₛₜ) stored in the mass data storage means (S), together with the schematic graphical representation of the production facility (P), are displayed in graphical form in a historical view (Gₕᵢₛₜ) on the display device (A, A'), wherein in the historical view (Gₕᵢₛₜ), a field (Z) is represented for displaying a time-point (t) that, in respect of time scale, corresponds to the representation of the production facility, wherein the time-point display field (Z) is part of a play-back field (B) for selectively inputting or selecting a time-point (t) and for playing back a plurality of time-points (t₁, t₂, tₙ) and wherein a multiplicity of cycle stations (TP) is provided, at which, respectively, one work operation can be performed in production of the parts (T), such as concrete or reinforcement elements, wherein a particular normal dwell time at a cycle station (TP) is assigned substantially to each part (T), wherein, in the case of a dwell time of a part (T) exceeding this normal dwell time, a warning signal can be output.

2. A production facility according to claim 1, **characterized in that** the electronic computer unit (R) is part of the control computer (L).

3. A production facility according to claim 1 or 2, **characterized in that**, for the representation on the display device (A'), it is possible to select between the current view (Gₐₖₜ) and the historical view (Gₕᵢₛₜ).

4. A production facility according to one of the claims 1 to 3, **characterized in that**, in the historical view (Gₕᵢₛₜ), the schematic graphical representation of the production facility (P) having historical status data (Dₕᵢₛₜ) corresponds substantially to the schematic graphical representation of the production facility (P) having current status data (Dₐₖₜ).

5. A production facility according to one of claims 1 to 4, **characterized in that**, in the historical view (Gₕᵢₛₜ), as compared with the current view (Gₐₖₜ), the remaining dwell time (W) at the respective cycle station (TP) can additionally be displayed for each part (T) in production.

6. A production facility according to one of claims 1 to 5, **characterized in that**, in the historical view (Gₕᵢₛₜ), a field (F) for displaying cycle-station-related and/or parts-related data is displayed, in addition to the representation of the production facility.

7. A production facility according to one of claims 1 to 6, **characterized in that**, in the historical view (Gₕᵢₛₜ), it is possible to display, for each cycle station (TP) or each part (T), a delay time (V) that corresponds to the dwell time of the part (T) at the cycle station (TP) after the enabling signal to proceed to the next cycle station (TP).

8. A production facility according to claim 7, **characterized in that** the colour representation or highlighting of the cycle station (TP) under consideration alters with the display of the delay time (V).

9. A production facility according to one of claims 1 to 8, **characterized in that** the current status data (Dₐₖₜ) can be represented on the same display device (A') as the historical status data (Dₕᵢₛₜ).

10. A production facility according to one of claims 1 to 9, **characterized in that**, in the historical view (Gₕᵢₛₜ), a plurality of time-points (t₁, t₂, tₙ) of the historical view (Gₕᵢₛₜ) of the representation of the production facility, preferably separated by equal intervals, can be played back or displayed in the manner of a film.

11. A production facility according to one of claims 1 to 10, **characterized in that** the current view (Gₐₖₜ) and the historical view (Gₕᵢₛₜ) can be displayed, either alternately or next to each other, on the same display device (A').

## Revendications

1. Installation de production (P) pour la fabrication automatisée de pièces (T), avec
- une installation de circulation de palettes (PU) pour la fabrication d'éléments de béton armé, les éléments de béton présentant des formes différentes les unes des autres sur quasiment chaque palette (C) de l'installation de circulation de palettes (PU),
- une installation d'armature (BA) pour la fabrication d'éléments d'armature, les éléments d'armature présentant des formes différentes,
- un calculateur pilote (L) électronique qui est en liaison avec des capteurs et des éléments de commande de l'installation de production (P) et qui commande le déroulement de la production,
- au moins un dispositif d'affichage (A) pour la représentation graphique schématique de l'installation de production (P) et de ses données d'état actuelles (Dₐₖₜ), **caractérisée par**
- une mémoire de masse (S), dans laquelle les données d'état (D) - comprenant l'affectation des données des palettes (C) y compris les données CAD correspondantes - de l'installation de production (P) peuvent être mémorisées selon un indice temporel pendant une période de temps dépassant le temps de production d'une pièce (T),
- une unité de calculateur (R) électronique
- ainsi qu'un dispositif d'affichage (A') par le biais duquel les données d'état historiques (Dₕᵢₛₜ) mémorisées dans la mémoire de masse (S) peuvent être appelées et affichées graphiquement conjointement avec une représentation graphique schématique de l'installation de circulation de palettes (PU) et de l'installation d'armature (BA) de l'installation de production (P), une vue actuelle (Gₐₖₜ) de la représentation de l'installation de production et les données d'état historiques (Dₕᵢₛₜ) mémorisées dans la mémoire de masse (S) peuvent être affichées graphiquement sur le dispositif d'affichage (A, A') conjointement avec la représentation graphique schématique de l'installation de production (P) dans une vue historique (Gₕᵢₛₜ), un champ (Z) étant représenté dans la vue historique (Gₕᵢₛₜ) pour l'affichage d'un instant (t) correspondant temporellement à la représentation de l'installation de production, le champ d'affichage de l'instant (Z) étant une partie d'un champ de lecture (B) pour l'entrée ou respectivement la sélection ciblée d'un instant (t) et pour la lecture de plusieurs instants (t₁, t₂, tₙ), et une multiplicité de positions de cycle (TP) étant prévues dans lesquelles respectivement une phase de travail peut être exécutée lors de la fabrication des pièces (T) telles que des éléments de béton ou respectivement d'armature, une durée de séjour normale définie dans une position de cycle (TP) étant affectée à chaque pièce (T), un signal d'alarme pouvant être délivré en cas de durée de séjour d'une pièce (T) dépassant cette durée de séjour normale.

2. Installation de production selon la revendication 1, **caractérisée en ce que** l'unité de calculateur (R) électronique est une partie du calculateur pilote (L).

3. Installation de production selon la revendication 1 ou 2, **caractérisée en ce que**, pour la représentation sur le dispositif d'affichage (A'), il est possible de choisir entre la vue actuelle (Gₐₖₜ) et la vue historique (Gₕᵢₛₜ).

4. Installation de production selon l'une des revendications 1 à 3, **caractérisée en ce que**, dans la vue historique (Gₕᵢₛₜ), la représentation graphique schématique de l'installation de production (P) avec des données d'état historiques (Dₕᵢₛₜ) coïncide essentiellement avec la représentation graphique schématique de l'installation de production (P) avec des données d'état actuelles (Dₐₖₜ).

5. Installation de production selon l'une des revendications 1 à 4, **caractérisée en ce que**, en face de la vue actuelle (Gₐₖₜ), la durée de séjour résiduelle (W) dans la position de cycle (TP) respective peut en plus être affichée dans la vue historique (Gₕᵢₛₜ) pour chaque pièce (T) en cours de fabrication.

6. Installation de production selon l'une des revendications 1 à 5, **caractérisée en ce que**, dans la vue historique (Gₕᵢₛₜ), un champ (F) pour l'affichage de données liées aux positions de cycle et/ou liées aux pièces est représenté près de la représentation de l'installation de production.

7. Installation de production selon l'une des revendications 1 à 6, **caractérisée en ce que**, dans la vue historique (Gₕᵢₛₜ), une durée de temporisation (V) peut être affichée pour chaque position de cycle (TP) ou respectivement pour chaque pièce (T), elle correspond à la durée de séjour de la pièce (T) dans la position de cycle (TP) depuis la validation de la poursuite du mouvement vers la position de cycle (TP) suivante.

8. Installation de production selon la revendication 7, **caractérisée en ce que** la représentation en couleur ou respectivement l'enregistrement de la position de cycle (TP) concernée varie avec l'affichage de la durée de temporisation (V).

9. Installation de production selon l'une des revendications 1 à 8, **caractérisée en ce que** les données d'état actuelles (Dₐₖₜ) peuvent être représentées sur le même dispositif d'affichage (A') que les données d'état historiques (Dₕᵢₛₜ).

10. Installation de production selon l'une des revendications 1 à 9, **caractérisée en ce que**, dans la vue historique (Gₕᵢₛₜ), plusieurs instants (t₁, t₂, tₙ) de la vue historique (Gₕᵢₛₜ) de la représentation de l'installation de production, de préférence séparés par des intervalles égaux, peuvent être affichés ou respectivement visionnés à la façon d'un film.

11. Installation de production selon l'une des revendications 1 à 10, **caractérisée en ce que** la vue actuelle (Gₐₖₜ) et la vue historique (Gₕᵢₛₜ) peuvent être affichées sur le même dispositif d'affichage (A') soit de façon alternée soit l'une à côté de l'autre.
